# EUROPÄISCHE PATENTANMELDUNG

(11) **EP 4 007 080 A1**
(43) Veröffentlichungstag der Anmeldung: **01.06.2022**
(21) Anmeldenummer: 21209544.2
(22) Anmeldetag: 22.11.2021
(51) Int. Cl.: H01R 13/622, H01R 13/59, F21V 23/06, H02G 3/00, H01R 13/74, H01R 13/58

(54) **LEUCHTENKLEMME MIT VERSCHLUSSTÜLLE**

(30) Priorität: 30.11.2020 DE 102020131734
(71) Anmelder: Adels-contact Elektrotechnische Fabrik GmbH & Co. KG, 51469 Bergisch-Gladbach (DE)
(72) Erfinder: KOHL, Hans Peter, 51061 Köln (DE); RENGER, Dirk, 50126 Bergheim (DE)
(74) Vertreter: Dr. Solf & Zapf Patent- und Rechtsanwalts PartG mbB

(57) **Zusammenfassung**

Die vorliegende Erfindung betrifft eine Leuchtenklemme (1) aufweisend einen Anschlusskörper (2) mit einem Außengewindestutzen und einer auf ein Außengewinde des Außengewindestutzens mit einem Innengewinde (10) aufschraubbaren Verschlusstülle (6). Die Verschlusstülle (6) weist einen Schutzkanal (12) und an der dem Anschlusskörper (2) gegenüberliegenden Stirnseite eine Einführungsöffnung zum Durchstecken einer elektrischen Zuleitung (16) in eine Einführrichtung (E) entlang einer Kanalachse des Schutzkanals (12) zum Anschließen an den Anschlusskörper (2) auf. Der Anschlusskörper (2) weist eine Spannfläche (22) auf, aus welcher sich der Außengewindestutzen (4) gegen die Einführrichtung (E) heraus erstreckt, wobei der Außengewindestutzen (4) durch eine Montageöffnung einer Wandung (24), insbesondere einer Gehäusewandung, durchführbar ist, so dass die Wandung (24) mit einem Randbereich der Montageöffnung zwischen der Verschlusstülle (6) und der Spannfläche (22) einspannbar ist.

Weiterhin ist eine hülsenartige Zugentlastung (18) koaxial in dem Schutzkanal (12) der Verschlusstülle (6) angeordnet. Diese ist zwischen einer Stirnfläche des Außengewindestutzens und der Einführungsöffnung der Verschlusstülle (6) axial zur Kanalachse verspannbar ausgebildet.

## Beschreibung

Die Erfindung betrifft eine Leuchtenklemme, welche einen Anschlusskörper mit einem Außengewindestutzen aufweist. Weiterhin weist die Leuchtenklemme eine auf ein Außengewinde des Außengewindestutzens mit einem Innengewinde aufschraubbare Verschlusstülle auf, wobei die Verschlusstülle einen Schutzkanal aufweist. Die Verschlusstülle weist an einer dem Anschlusskörper gegenüberliegenden Stirnseite eine Einführungsöffnung zum Durchstecken einer elektrischen Zuleitung in eine Einführrichtung entlang einer Kanalachse des Schutzkanals zum Anschließen an den Anschlusskörper auf. Weiterhin weist die Leuchtenklemme eine koaxial in dem Schutzkanal der Verschlusstülle angeordnete, hülsenartige Zugentlastung auf, die zwischen einer Stirnfläche des Außengewindestutzens und der Einführungsöffnung der Verschlusstülle axial zur Kanalachse verspannbar ausgebildet ist.

Weiterhin betrifft die Erfindung die hülsenartige Zugentlastung zur Montage in einer Leuchtenklemme.

Aus der DE 20 2008 011 524 U1 ist eine Beleuchtungseinrichtung mit einer Zugentlastung bekannt. Bei dieser Beleuchtungseinrichtung nimmt ein Gehäuse einen elektrischen Anschluss für eine Anschlussleitung auf, wobei am Gehäuse selbst ein, die Anschlussleitung ebenfalls aufnehmendes, Anschlusselement lösbar montierbar ist. Das Anschlusselement ist ähnlich einer Überwurfmutter ausgebildet, wobei bei der Montage das Anschlusselement Haltezungen einer hülsenartigen Zugentlastung radial in Richtung der Anschlussleitung verschiebt.

Nachteilig hat sich bei dieser Variante herausgestellt, dass die elektrische Klemmeinrichtung auf das Gehäuse der einen Beleuchtungseinrichtung derart limitiert ist, dass eine Zugentlastung und Dichtung der Anschlussleitung erst nach und nur mit einer Verschraubung des Anschlusselements mit einem korrespondierend ausgebildeten Anschlussstutzen des Gehäuses erfolgt.

Eine weitere Leuchtenklemme ist aus der DE 20 2016 016 319 U1 bekannt. Besonders vorteilhaft ist dabei die Verschlusstülle, welche die elektrische Zuleitung insbesondere vor Feuchtigkeit isoliert. Weiterhin weist diese Leuchtenklemme eine Zugentlastung auf, welche an einer äußeren Mantelfläche befestigt wird und sich gegen die Einführrichtung mit zwei Haltearmen erstreckt. An den Haltearmen ist ein Spannfutter angeordnet, durch welches die Zuleitung hindurchgeführt und anschließend eingespannt werden kann. Mittels der Haltearme kann sich das Spannfutter an der äußeren Mantelfläche der Verschlusstülle abstützen, so dass bei einem Zug auf die Zuleitung gegen die Einführrichtung eine Anschlussverbindung zwischen der Zuleitung und dem Anschlusskörper entlastet wird.

Diese Art der Zugentlastung hat jedoch die Nachteile, dass die Verschlusstülle zur Anordnung der Haltearme präpariert werden muss, dass die Zugentlastung in Einführrichtung betrachtet vor der Einführungsöffnung zusätzlichen Bauraum zum Einspannen der Zuleitung benötigt und dass die Zugentlastung vor äußeren Einflüssen ungeschützt frei zugänglich ist. Weiterhin handelt es sich bei der derartigen Zugentlastung um eine mehrteilige Ausführung, was sowohl den Montageaufwand als auch die Komplexität der Zugentlastung nachteilig erhöht.

Weitere Varianten von Zugentlastungen sind aus der DE 203 17 623 U1 bekannt. Insbesondere weist in einer ersten Variante der Anschlusskörper ein rohrförmiges Endstück mit einem Außengewinde auf, wobei das Endstück mittels einer axialen Schlitzung eine Vielzahl von radial eindrückbaren Haltearmen aufweist. Die Haltearme sind dabei unter der Wirkung einer Überwurfmutter radial eindrückbar und geeignet, eine durch das Endstück geführte Leitung durch Klemmung zu verspannen. Dadurch wird eine Zugentlastungseinrichtung für eine elektrische Kontaktierung der Leitung bereitgestellt.

Nachteilig hat sich gezeigt, dass diese Variante der Zugentlastung nur einen begrenzten Schutz gegen Schmutz und Feuchtigkeit bietet. Dadurch, dass die Überwurfmutter und die axiale Schlitzung außerhalb eines abgeschirmten Gehäuses angeordnet sind, können äußere Einflüsse relativ leicht auf die Leitung bzw. die elektrische Kontaktierung einwirken. Weiterhin wird eigens für die Zugentlastung ein Spannmittel, hier in Form einer Überwurfmutter, benötigt, was die Anzahl der Komponenten der Zugentlastung ebenfalls erhöht. Zudem hat sich gezeigt, dass die Haltearme, insbesondere bei mehrfacher Verbindung der Überwurfmutter, beschädigt werden können, verschleißen oder sogar abbrechen.

Eine weiter aus der DE 203 17 623 U1 bekannte Zugentlastungseinrichtung sieht vor, dass ein Kontaktträger des Anschlusskörpers Aufnahmen zur klemmenden Befestigung von Adern einer elektrischen Leitung aufweist. Der Kontaktträger weist zudem einen plattenartigen, mit Bohrungen versehenen Ansatz zur Montage einer Zugentlastung auf. Die elektrisch mit den Aufnahmen verbundene Leitung wird dabei mittels einer Halteschelle gegen den Ansatz verspannt.

Diese Ausführung benötigt während der Montage einen steten Zugang zur Zugentlastung. Weiterhin sind zur Montage Montagemittel, sowohl Werkzeuge als auch Schrauben, notwendig. Das verursacht einen hohen Montageaufwand. Weiterhin ist diese Ausführung anfällig für Fehlmontagen und es müssen die Montagemittel zusätzlich gelagert und zur Montage bereitgestellt werden. In einem weiteren Aspekt besteht die Zugentlastung aus mehreren Komponenten, die zusammenwirken. Dadurch ist die Komplexität erhöht und die Montage erschwert.

Der Erfindung liegt die Aufgabe zugrunde, die aus dem Stand der Technik bekannten Leuchtenklemmen derart zu verbessern, dass auch die Zugentlastung in einem montierten Zustand geschützt ist und gleichzeitig die Montage vereinfacht wird, insbesondere dass die Montage der Zugentlastung ohne Montagemittel wie Schrauben und Werkzeug erfolgen kann.

Die Aufgabe wird erfindungsgemäß durch die Merkmale des Anspruchs 1 gelöst. Dadurch, dass der Anschlusskörper eine Spannfläche aufweist, aus welcher sich der Außengewindestutzen gegen die Einführrichtung heraus erstreckt, wobei der Außengewindestutzen durch eine Montageöffnung einer Wandung durchführbar ist, so dass die Wandung mit einem Randbereich der Montageöffnung zwischen der Verschlusstülle und der Spannfläche einspannbar ist, wird die Montage der Leuchtenklemme vereinfacht.

Bei der Wandung handelt es sich insbesondere um eine Gehäusewandung. Die Wandungen weisen insbesondere dabei keine genormte bzw. einheitliche Wandstärke auf.

Erfindungsgemäß wird die Zugentlastung bei der Montage der Verschlusstülle, d. h. bei einem Aufschrauben der Verschlusstülle auf den Außengewindestutzen, verspannt. Synergetisch mit der Montage der Verschlusstülle wird dadurch die Zugentlastung auf der Zuleitung montiert, ohne dass es für die Montage der Zugentlastung eines eigenen Montageschritts bedarf. Weiterhin kann die Montage ganz ohne Werkzeug oder zumindest ohne gesondertes Werkzeug für die Zugentlastung erfolgen. Ein besonderer Vorteil besteht weiterhin darin, dass die Verschlusstülle vorteilhaft sowohl eine Anschlussstelle der Zuleitung mit dem Anschlusskörper schützt, als auch die Zugentlastung.

Die Leuchtenklemme befindet sich in einem montierten Zustand, wenn die Zuleitung durch den Schutzkanal durchgeführt und an einer Anschlussstelle an dem Anschlusskörper angeschlossen ist. Weiterhin ist in diesem Zustand die Verschlusstülle auf den Außengewindestutzen bis zu einer Endlage geschraubt.

Insbesondere muss in der erfindungsgemäßen Ausführung der Leuchtenklemme die Verschlusstülle und/oder der Anschlusskörper nicht für die Aufnahme der Zugentlastung präpariert werden, so dass die Verschlusstülle und der Anschlusskörper universell für eine Ausführung ohne eine Zugentlastung, als auch für eine erfindungsgemäße Ausführung mit der hülsenartigen Zugentlastung einsetzbar und jederzeit umrüstbar ausgebildet sind. Zudem kann die Zugentlastung, falls diese nach mehrfachem Gebrauch bzw. Verbinden der Verschlusstülle verschlissen ist, leicht ausgetauscht werden.

Insbesondere bei Gehäusewandungen von Leuchten-Gehäusen werden Wandstärken in einem Bereich von ca. 0,25 mm bis 3,5 mm, insbesondere in einem Bereich von ca. 0,4 mm bis 3 mm und häufig in einem Bereich von ca. 0,5 mm bis 2,5 mm verwendet. Gemäß einer vorteilhaften Ausführung der Leuchtenklemme ist der Anschlusskörper und die Verschlusstülle derart ausgebildet, dass die genannten Wandstärken einspannbar sind, wobei insbesondere die Funktion der Zugentlastung gewährleistet wird.

In einer alternativen Variante ist zwischen der Wandung und der Verschlusstülle eine Spannmutter angeordnet. Die Spannmutter kann in einer besonderen Ausführung auch einen Angriff für ein Werkzeug aufweisen und/oder aus einem anderen Material gefertigt sein, um insbesondere die Wandung stärker einspannen zu können. Die Spannmutter weist ein Innengewinde auf und wird vorzugsweise ebenfalls wie die Verschlusstülle auf den Außengewindestutzen aufgeschraubt, so dass der Außengewindestutzen an der Wandung anliegt.

Gemäß einer Variante der Leuchtenklemme weist die Zugentlastung auf einer zum Außengewindestutzen weisenden Frontfläche zumindest einen, insbesondere zwei oder mehr, umfangsgemäß gleichmäßig verteilte und vorzugsweise elastisch verformbare Distanzausgleichselemente auf. Zweckmäßig sind die Distanzausgleichselemente derart ausgebildet, dass sie sich beim Verspannen der Zugentlastung gegen die Stirnfläche des Außengewindestutzens pressen können und sich dabei elastisch verformen. Bei der elastischen Verformung bzw. durch die elastische Verformung wird ein Abstand der Frontfläche zu der Stirnfläche verringert. Mittels der Distanzausgleichselemente wird synergetisch zu dem Außengewindestutzen die funktionswahrende universale Montierbarkeit der Leuchtenklemme in Bezug auf unterschiedliche Wandstärken gefördert.

Dadurch, dass vorzugsweise ein Teil des Außengewindes des Außengewindestutzens von der Wandung und ggf. von einer Spannmutter übergriffen werden, ist die Verschlusstülle selbst je nach Wandstärke der Wandung, axial zur Kanalachse betrachtet, unterschiedlich weit auf den Außengewindestutzen aufschraubbar. Beispielhaft ist die Verschlusstülle bei einer dünnen Wandung mit 0,5 mm um 2 mm näher an der Spannfläche als bei einer dickeren Wandung mit 2,5 mm. Dadurch verringert sich ein verfügbarer Montageraum im Bereich des Innengewindes des Schutzkanals für die Zugentlastung in axialer Richtung zur Kanalachse.

Mittels der vorteilhaften Distanzausgleichselemente passt sich die Zugentlastung beim Verspannen zwischen der Stirnfläche und Verschlusstülle an den verfügbaren Montageraum an. Entsprechend dem Beispiel ist der verfügbare Montageraum bei der Montage in einer dünnen Wandung relativ gering, da die Verschlusstülle weiter auf den Anschlussstutzen aufgeschraubt ist. In diesem Fall verformen sich die Distanzausgleichselemente beim Erreichen einer bestimmten Einspannkraft, wodurch die Montagehilfe sicher und nicht überbelastet angeordnet ist. Gemäß diesem Beispiel ist der verfügbare Montageraum bei einer dicken Wandung relativ groß. Die Distanzausgleichselemente sind dabei entweder unverformt oder teilweise, d. h. nicht maximal verformt, so dass auch hier eine sichere Positionierung gewährleistet ist. Die Distanzausgleichselemente ermöglichen es, das Risiko, dass die Zugentlastung bei einer Montage der Leuchtenklemme in einer dünnen Wandung zu stark verspannt wird oder die Montage auf Grund des geringeren Montageraums nicht möglich ist, zu verringern.

Zweckmäßig sind die Distanzausgleichselemente als zwei Distanzausgleichsstege ausgebildet, welche sich jeweils axial zur Kanalachse und in Einführrichtung von einem mit der Frontfläche verbundenen Anfang jeweils zu einem freien Ende hin erstrecken, wobei die Distanzausgleichsstege mittels eines axial zur Kanalachse ausgebildeten Schlitzes voneinander getrennt ausgebildet sind. Vorteilhaft ermöglicht es die paarweise Anordnung der Distanzausgleichsstege, dass sich beim Verspannen die Distanzausgleichsstege invertiert zueinander verformen, so dass in ihrer Gesamtheit die Zugentlastung gleichmäßig zwischen der Stirnfläche und der Verschlusstülle verspannt wird.

Ähnlich wie die Distanzausgleichselemente kann ergänzend zu den Distanzausgleichselementen oder alternativ zu den Distanzausgleichselementen die Zugentlastung der Leuchtenklemme gemäß einer vorteilhaften Ausführung zumindest einen, insbesondere zwei oder mehr, umfangsgemäß gleichmäßig verteilte, elastisch verformbare Ausgleichsbeine aufweisen. Die Ausgleichsbeine sind vorzugsweise an einem radial zur Kanalachse nach außen ragenden Kragen der Zugentlastung angeordnet, insbesondere an einer gegen die Einführrichtung weisenden Seite des Kragens. Wie auch die Distanzausgleichselemente ermöglichen die Ausgleichsbeine dabei einen Distanzausgleich und sind besonders vorteilhaft, um die Leuchtenklemme an einen Bereich von unterschiedlichen Wandstärken anzupassen. Die Ausgleichsbeine sind zweckmäßig gegen die Einführrichtung weisend vom Kragen derart abstehend ausgebildet sind, dass sie sich beim Verspannen der Zugentlastung gegen eine in Einführrichtung weisende Lagerstufe der Verschlusstülle pressen können und sich dabei elastisch verformen, so dass sich der Abstand des Kragens der Zugentlastung zur Lagerstufe der Verschlusstülle verringert.

In einer vorteilhaften Ausführung ist der Kragen im Bereich der Ausgleichsbeine unterbrochen, wobei die Ausgleichsbeine senkrecht zur Einführrichtung an dem Kragen angeformt sind und sich in einem Winkel oder einer Kurve gegen Einführrichtung und in den unterbrochenen Bereich des Kragens weisend erstrecken. Insbesondere können sich dadurch die Ausgleichsbeine bei der elastischen Verformung in den unterbrochenen Bereich des Kragens verformen.

Zweckmäßig hat sich zudem als vorteilhaft herausgestellt, dass die Zugentlastung auf einer zum Außengewindestutzen weisenden Frontfläche zumindest einen, insbesondere zwei oder mehr, umfangsgemäß gleichmäßig verteilte Gewindelager aufweist. Vorzugsweise sind die Gewindelager derart ausgebildet, dass die Zugentlastung an dem Innengewinde der Verschlusstülle gelagert ist. Weiterhin kann das Gewindelager ähnlich den Distanzausgleichselementen derart ausgebildet sein, dass sie sich beim Verspannen der Zugentlastung gegen die Stirnfläche des Außengewindestutzens pressen und eine definierte Kontaktstelle zu der Stirnfläche des Außengewindestutzens darstellen.

Vorteilhaft für die Lagerung sowie die Montage der Zugentlastung weisen die Distanzausgleichselemente und/oder die Gewindelager radial zur Kanalachse nach außen weisende Gewindekeile auf. Zweckmäßig sind die Gewindekeile korrespondierend zu dem Innengewinde der Verschlusstülle ausgebildet, so dass sich die Zugentlastung mittels der Gewindekeile axial zur Kanalachse in einem Gewindegang des Innengewindes der Verschlusstülle abstützen kann. Vorteilhaft ist die Zugentlastung in einem nicht montierten Zustand der Leuchtenklemme verlustsicher in der Verschlusstülle gelagert.

Die Gewindekeile können in dem Gewindegang angeordnet werden, in den die Zugentlastung axial zur Kanalachse gegen die Einführrichtung in den Schutzkanal eingesteckt wird, wobei sich die Distanzausgleichselemente radial, vorzugsweise elastisch, verformen, wenn die Gewindekeile gegen eine Gewindeflanke des Innengewindes stoßen, und sich rückformen, wenn sich die Gewindekeile im Bereich des Gewindegangs befinden.

Alternativ oder ergänzend sind die Gewindekeile der Gewindelager und/oder Distanzausgleichselemente derart ausgebildet, dass die Zugentlastung in das Innengewinde ein- und ausschraubbar ist. Insbesondere die Entnahme der Zugentlastung aus der Verschlusstülle ist bei einer ausschraubbaren Ausführung leichter.

Gemäß einer Ausführung der Erfindung weist die Zugentlastung zumindest zwei sich axial zur Kanalachse erstreckende und zur Kanalachse radialelastisch angeordnete Federarme auf. Zweckmäßig erstrecken sich die Federarme jeweils gegen die Einführrichtung weisend zu einem freien Abschluss und sind radial nach außen gegen eine Rückstellkraft elastisch verformbar. Vorteilhaft können die Federarme mittels der zu montierenden Zuleitung elastisch verformt werden. Insbesondere ragen dafür die Federarme radial zur Kanalachse in einen Bereich, welchen die Zuleitung beim Durchführen in Einführrichtung passiert. Vorteilhaft sind die Federarme durch die Zuleitung elastisch verformbar ausgebildet, so dass die Federarme bei eingeführter Zuleitung mit einer Rückstellkraft gegen einen Leitungsmantel der Zuleitung gedrückt werden und zumindest mit einer Reibkraft die Zugentlastung erwirken.

Um die elastische Verformbarkeit bzw. die Rückstellkraft einzustellen, verringert sich gemäß einer Variante jeweils eine in Umfangsrichtung des Schutzkanals betrachtete Breite der Federarme zu dem freien Abschluss hin, zumindest über einen Teilabschnitt des jeweiligen Federarms.

Ergänzend zu der Reibkraft, mit welcher die Zugentlastung auf den Leitungsmantel der Zuleitung einwirkt, sieht eine vorteilhafte Ausführung der Erfindung vor, dass die Federarme jeweils auf einer zur Kanalachse weisenden Innenfläche eine von der Innenfläche radial abstehende Kralle aufweisen. Die Kralle weist vorzugsweise eine gegen die Einführrichtung weisende Schneidkante auf. Vorteilhaft ist die Kralle derart ausgebildet, dass sie beim Einführen der Zuleitung in die Einführrichtung über den Leitungsmantel der Zuleitung gleitet und sich bei einem Auszug der Zuleitung gegen die Einführrichtung mit der Schneidkante in den Leitungsmantel der Zuleitung eingräbt. Insbesondere kann durch die Anordnung und Ausbildung der Schneidkante die Neigung zum Einschneiden der Kralle in den Leitungsmantel konfiguriert werden. Die Kralle bewirkt einen besseren Rückhalt gegen die Einführrichtung der Zuleitung und entlastet die Anschlussstelle der Zuleitung am Anschlusskörper. Weiterhin kann durch die Konfigurierung der Neigung zum Einschneiden die Rückstellkraft der Federarme angepasst werden oder die Schneidkante an die Rückstellkraft angepasst werden. Insbesondere kann bei einer starken Neigung zum Einschneiden die Rückstellkraft der Federarme verringert werden, wodurch das Durchführen der Zuleitung durch den Schutzkanal erleichtert wird.

Gemäß einer besonders vorteilhaften Ausführung weisen die Federarme an ihren freien Abschlüssen jeweils eine sich radial zur Kanalachse nach außen erstreckende Anlagelasche auf. Zweckmäßig ist die Anlagelasche axial zur Kanalachse zumindest in Einführrichtung gegen eine Rückstellkraft elastisch verformbar ausgebildet. Insbesondere sind die radial nach außen zur Kanalachse weisenden Anlagelaschen zumindest teilweise auf einer Kreisbahn angeordnet, dessen zumindest größter Kreisdurchmesser zumindest bei einer zur Kanalachse radial nach außen weisenden elastischen Verformung der Federarme, insbesondere in dem montierten Zustand, größer ist, als ein kleinster Innendurchmesser des Schutzkanals in einem Schutzabschnitt des Schutzkanals zwischen dem Innengewinde und der Einführungsöffnung. Die Anlagelaschen wirken dabei synergetisch mit der elastischen Verformung der Federarme zusammen, so dass beim Einführen der Zuleitung die Federarme radial zur Kanalachse nach außen verformt werden, wodurch die Anlagelaschen gegen eine Innenwandung des Schutzkanals gedrückt werden und sich selbst gegen eine weitere Rückstellkraft verformen.

Die Anlagelaschen sind vorzugweise derart gestaltet, dass sie bei der Pressung gegen die Innenwandung des Schutzkanals in Einführrichtung biegen. Dazu weist beispielsweise die Anlagelasche einen in Einführrichtung abgewinkelten Endabschnitt auf. Vorzugsweise ist der Endabschnitt lediglich ab dem Zeitpunkt des ersten Anlagekontaktes zwischen der Anlagelasche und der Innenwandung des Schutzkanals, insbesondere wenn der Anlagekontakt durch eine radiale Verformung der Federarme herbeigeführt wird, in Einführrichtung abgewinkelt.

Vorteilhaft wird die Rückstellkraft der Anlagelaschen gegen eine Verformung in Einführrichtung mit einer Kraftausgleichsrippe verstärkt. Gemäß einer solchen Ausführung weisen insbesondere die Federarme auf einer zum Schutzkanal weisenden Außenfläche die Kraftausgleichsrippe auf. Die Kraftausgleichsrippen erstrecken sich vorzugsweise jeweils von einem Bereich im freien Abschluss des Federarms bis zumindest einem sich radial zur Kanalachse erstreckenden Teil der Anlagelasche. Die Kraftausgleichsrippe selbst ist zweckmäßig korrespondierend mit der Anlagelasche elastisch verformbar ausgebildet, um den vorteilhaften Effekt auf die Rückstellkraft der Anlagelasche zu bewirken.

Herstellungstechnisch von Vorteil ist die Zugentlastung in einer Variante der Leuchtenklemme monolithisch einstückig ausgebildet. Insbesondere ist die Zugentlastung monolithisch einstückig zusammen mit den Federarmen und/oder den Distanzausgleichselementen und/oder den Ausgleichsbeinen und/oder den Gewindelagern ausgebildet.

Weiterhin wird die eingangs genannte, der Erfindung zu Grunde gelegte Aufgabe mit einer Zugentlastung zur Montage in einer Leuchtenklemme, insbesondere in einer Leuchtenklemme der vorgenannten Art, mit den Merkmalen des Anspruchs 18 gelöst. Dabei weist die Zugentlastung erfindungsgemäß gemäß den Merkmalen der Zugentlastung zumindest eine der vorgenannten Ausführungen auf.

Weitere vorteilhafte Ausgestaltungen der Erfindung ergeben sich aus der folgenden Figurenbeschreibung und den abhängigen Unteransprüchen.

Es zeigen:
- Fig. 1: eine perspektivische Ansicht einer mit einer elektrischen Zuleitung teilmontierten Leuchtenklemme,
- Fig. 2: eine perspektivische Ansicht der Leuchtenklemme gemäß Figur 1 in einem montierten Zustand mit der elektrischen Zuleitung aus Figur 1,
- Fig. 3: eine Schnittansicht parallel zur Kanalachse auf eine Leuchtenklemme in einem mit der elektrischen Zuleitung montierten Zustand gemäß Figur 2,
- Fig. 4: eine Detailansicht des Bereichs A gemäß Figur 3,
- Fig. 5: eine Schnittansicht parallel zur Kanalachse entsprechend Figur 3 mit einer im Vergleich zu Figur 3 im Leitungsquerschnitt größeren elektrischen Zuleitung,
- Fig. 6: eine Detailansicht des Bereichs B gemäß Figur 5,
- Fig. 7: eine perspektivische Ansicht auf eine hülsenartige Zugentlastung,
- Fig. 8: eine Schnittansicht parallel zur Kanalachse auf eine Leuchtenklemme mit einer in Fig. 7 dargestellten Ausführung der Zugentlastung,
- Fig. 9: eine Detailansicht des Bereichs D gemäß Figur 8,
- Fig. 10: eine Seitenansicht senkrecht zu einer Kanalachse auf eine hülsenartige Zugentlastung,
- Fig. 11: eine Seitenansicht senkrecht zu der Kanalachse auf eine Zugentlastung gemäß Figur 10, welche auf einer elektrischen Zuleitung aufgeschoben angeordnet ist,
- Fig. 12: eine Detailansicht des Bereichs C gemäß Figur 11,
- Fig. 13: eine Detailansicht angenähert an Figur 11, wobei die Leuchtenklemme in einem montierten Zustand dargestellt und von einer Darstellung einer Verschlusstülle abgesehen ist, und
- Fig. 14: eine schematische Ansicht entsprechend dem montierten Zustand gemäß Figur 11, mit einer Darstellung der Verschlusstülle.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

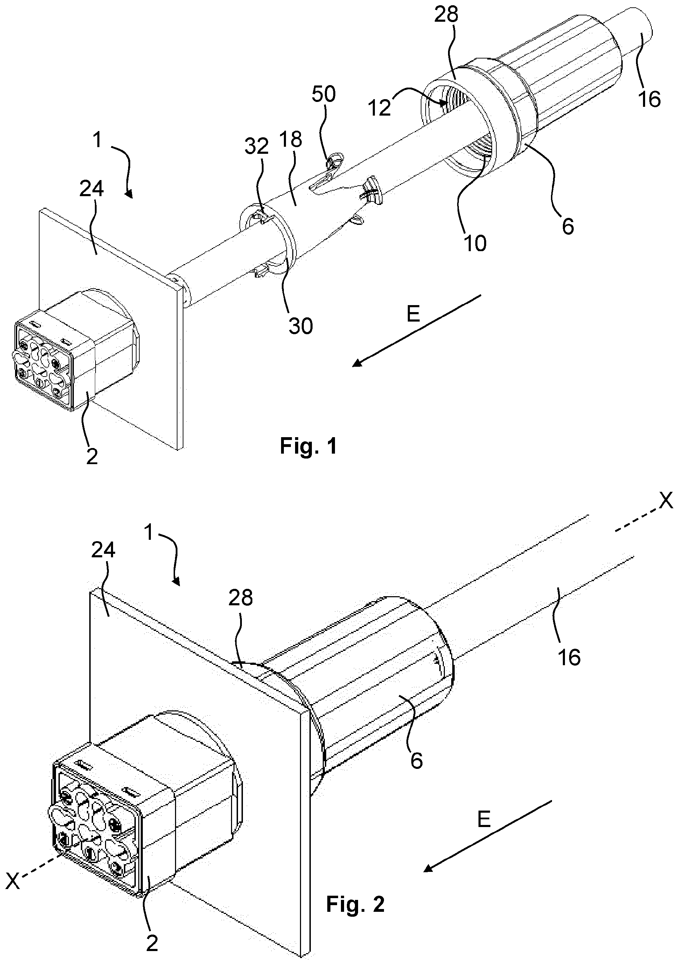

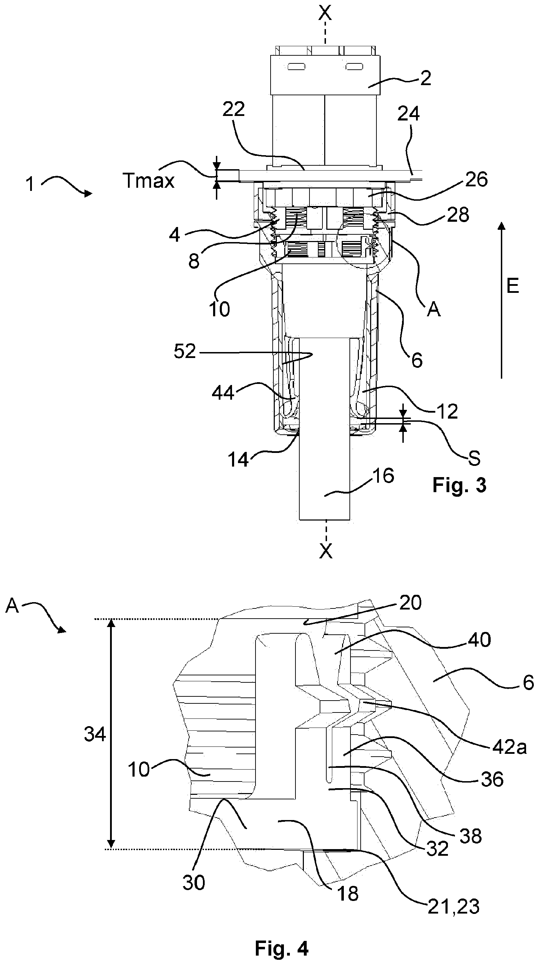

Insbesondere in den Figuren 1 und 2 ist eine Leuchtenklemme 1 dargestellt. Die Leuchtenklemme 1 weist einen Anschlusskörper 2 mit einem Außengewindestutzen 4 auf. Der Außengewindestutzen 4 ist vorteilhaft in den Figuren 3, 5 und 8 zu erkennen. Weiterhin weist die Leuchtenklemme 1 eine Verschlusstülle 6 auf, welche, wie in den Figuren 3, 5 und 8 dargestellt, auf einem Außengewinde 8 des Außengewindestutzens 4 mit einem Innengewinde 10 aufschraubbar ist.

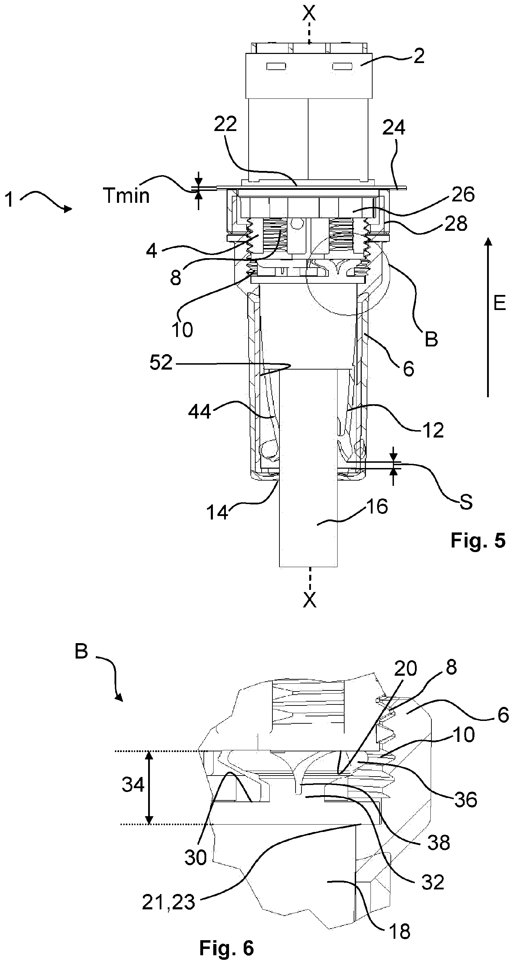

Die Verschlusstülle 6 weist einen, in den Figuren 3 und 5 dargestellten, Schutzkanal 12 auf. Weiterhin weist die Verschlusstülle 6 an der dem Anschlusskörper 2 gegenüberliegenden Stirnseite eine Einführungsöffnung 14 zum Durchstecken einer elektrischen Zuleitung 16 in eine Einführrichtung E entlang einer Kanalachse X des Schutzkanals 12 auf. Die Zuleitung 16 ist dabei zum Anschließen an den Anschlusskörper 2 entlang der Kanalachse X durch die Einführungsöffnung 14 durchsteckbar und entlang der Kanalachse X durch den Schutzkanal 12 bis zum Anschlusskörper 2 durchführbar.

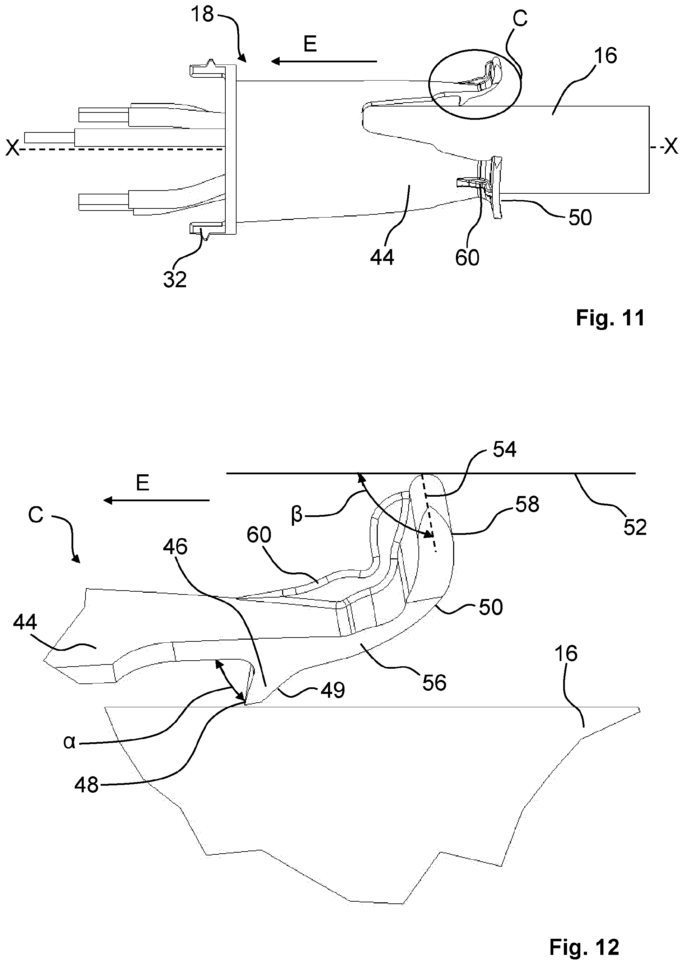

Insbesondere ist die anzuschließende Zuleitung 16 mehradrig. Zweckmäßig ist die Zuleitung 16 dreiadrig oder, wie im vorteilhaften Ausführungsbeispiel in Figur 11, fünfadrig ausgebildet.

Insbesondere ist die Verschlusstülle 6 als Zweikomponenten-Spritzgussteil ausgebildet, wie aus der DE 20 2016 06 319 U1 bekannt ist.

Wie in den Figuren 3 bis 5, 8 und 9 dargestellt, ist eine hülsenartige Zugentlastung 18 koaxial mit der Kanalachse X in dem Schutzkanal 12 der Verschlusstülle 6 angeordnet. Dabei ist die Zugentlastung 18 zwischen einer Stirnfläche 20 des Außengewindestutzens 4 und der Einführungsöffnung 14 der Verschlusstülle 6 axial zur Kanalachse X verspannbar ausgebildet.

Insbesondere in den Figuren 4, 6 und 9 ist dargestellt, dass die Zugentlastung 18 vorteilhaft einen radial zur Kanalachse X nach außen ragenden Kragen 21 aufweist. Der Kragen 21 erstreckt sich vorzugsweise umlaufend über die Zugentlastung 18. Mittels des Kragens 21 liegt die Zugentlastung 18 zweckmäßig, entsprechend den Figuren 4 und 6, auf einer korrespondierend im Schutzkanal 12 ausgebildeten, in Einführrichtung E weisenden, Lagerstufe 23 der Verschlusstülle 6 auf. Zweckmäßig stützt sich die Zugentlastung 18 mit dem Kragen 21 auf der Lagerstufe 23 gegen die Einführrichtung E ab. Vorteilhaft ist die Zugentlastung 18 zwischen der Lagerstufe 23 und der Stirnfläche 20 verspannbar, insbesondere derart verspannt, dass die Zugentlastung 18 ein zur Kanalachse X axiales Spiel S, wie in den Figuren 3, 5, 8 und 14 dargestellt, zu einem Randbereich der Einführungsöffnung 14 der Verschlusstülle 6 aufweist.

Die Zugentlastung 18 wird bei der Montage der Verschlusstülle 6, d. h. bei einem Aufschrauben der Verschlusstülle 6 auf den Außengewindestutzen 4, verspannt. Ein gesondertes Ausrichten und Montieren der Zugentlastung 18 entfällt, wodurch ein Montageschritt, welcher insbesondere selbst eine Fehlerquelle darstellen könnte, nicht notwendig ist. Wie dargestellt, ist die Zugentlastung 18 in einem montierten Zustand der Leuchtenklemme 1 innerhalb der Verschlusstülle 6 vor Umwelteinflüssen geschützt angeordnet.

Die Leuchtenklemme 1 ist im Sinne der Erfindung in einem montierten Zustand, wenn die Zuleitung 16 durch den Schutzkanal 12 durchgeführt und an einer Anschlussstelle an dem Anschlusskörper 2 angeschlossen ist. Weiterhin ist in diesem Zustand die Verschlusstülle 6 auf den Außengewindestutzen 4 bis zu einer Endlage geschraubt.

Zweckmäßig ist die Zugentlastung 18 derart ausgebildet, dass sie für Zuleitungen 16 mit einem Leitungsquerschnitt im Bereich von 1 mm² bis 3 mm², insbesondere einem Leitungsquerschnitt im Bereich von 1,25 mm² bis 2,75 mm², vorzugsweise einem Leitungsquerschnitt im Bereich von 1,5 mm² bis 2,5 mm², die Anschlussverbindung zwischen Zuleitung 16 und Anschlusskörper 2 wirksam entlastet, insbesondere die Anforderungen der Leuchtennorm EN 60598-1:2018-09, Absatz 5.2.10.3 an Zugentlastungen 18 erfüllt. Alternativ oder ergänzend ist die Zugentlastung 18 vorzugsweise derart ausgebildet, dass zwischen dem kleinsten wirksam montierbaren Leitungsquerschnitt der Zuleitung 16 und dem größten wirksam montierbaren Leitungsquerschnitt der Zuleitung 16 ein Toleranzbereich liegt. Zweckmäßig ist der Toleranzbereich bis zu 2 mm², insbesondere bis zu 1,5 mm², vorzugsweise bis zu 1 mm², ausgebildet, wobei insbesondere die Leuchtenklemme 1 die Anforderungen der Leuchtennorm EN 60598-1:2018-09, Absatz 5.2.10.3 an Zugentlastungen 18 erfüllt.

Bei der erfindungsgemäßen Leuchtenklemme 1 weist der Anschlusskörper 2 eine Spannfläche 22 auf, aus welcher sich der Außengewindestutzen 4 gegen die Einführrichtung E heraus erstreckt. Der Außengewindestutzen 4 ist dabei durch eine Montageöffnung einer, in den Figuren 1 und 2 dargestellten, Wandung 24 durchführbar. Erfindungsgemäß ist die Wandung 24 in dieser Ausführung, wie dargestellt, mit einem Randbereich der Montageöffnung zwischen der Verschlusstülle 6 und der Spannfläche 22 einspannbar.

Insbesondere ist exemplarisch in den Figuren 1 und 2 die Wandung 24 plattenartig ausgebildet, wobei die Wandung 24 nicht auf ein bestimmtes Bauteil oder eine bestimmte Form beschränkt ist. In einem nicht dargestellten Beispiel ist die Wandung 24 vorteilhaft eine Gehäusewandung, z. B. eines Leuchten-Gehäuses.

In einer vorteilhaften Variante der Erfindung ist die Leuchtenklemme 1 nicht auf eine bestimmte Wandstärke der Wandung 24 limitiert. Zweckmäßig kann die Leuchtenklemme 1 zwischen der Spannfläche 22 und der Verschlusstülle 6 einen Wandstärkenbereich einklemmen, so dass die Leuchtenklemme 1 universeller einsetzbar ist.

Vorzugsweise ist die Leuchtenklemme 1 für Wandstärken in einem Bereich von ca. 0,25 mm bis 3,5 mm, insbesondere in einem Bereich von ca. 0,4 mm bis 3 mm und vorteilhaft in einem Bereich von ca. 0,5 mm bis 2,5 mm derart geeignet, dass Wandungen mit Wandstärken innerhalb dieser Bereiche zwischen den Anschlusskörper 2 und die Verschlusstülle 6 einspannbar sind. Insbesondere wird innerhalb des Wandstärkenbereichs die Funktion der Zugentlastung 18, insbesondere nach den Anforderungen der Leuchtennorm EN 60598-1:2018-09, Absatz 5.2.10.3 an Zugentlastungen 18, gewährleistet.

Gemäß den dargestellten Ausführungen ist zwischen der Wandung 24 und der Verschlusstülle 6 eine Spannmutter 26 angeordnet. Die Spannmutter 26 kann in einer besonderen Ausführung auch ein Angriff für ein Werkzeug aufweisen und/oder aus einem anderen Material gefertigt sein, um insbesondere die Wandung 24 stärker einspannen zu können. Die Spannmutter 26 weist ein Innengewinde auf und wird, wie dargestellt, vorzugsweise wie die Verschlusstülle 6 auf den Außengewindestutzen 4 aufgeschraubt. Entsprechend den Ausführungen in den Figuren 3 und 5 ist die Wandung 24 zwischen der Verschlusstülle 6 und der Spannfläche 22 und zwischen der Spannmutter 26 und der Spannfläche 22 angeordnet.

Die in den Figuren dargestellte Verschlusstülle 6 weist vorteilhaft eine Dichthülse 28 an dem in Einführrichtung E weisenden Ende auf. Vorteilhaft übergreift die Dichthülse 28, wie in den Figuren 3 und 4 dargestellt, die Spannmutter 26 und dichtet die Verschlusstülle 6, insbesondere den Schutzkanal 12, gegen die Wandung 24 ab. Die Dichthülse 28 ist vorzugsweise als eine an der Verschlusstülle 6 angespritzte Komponente ausgebildet.

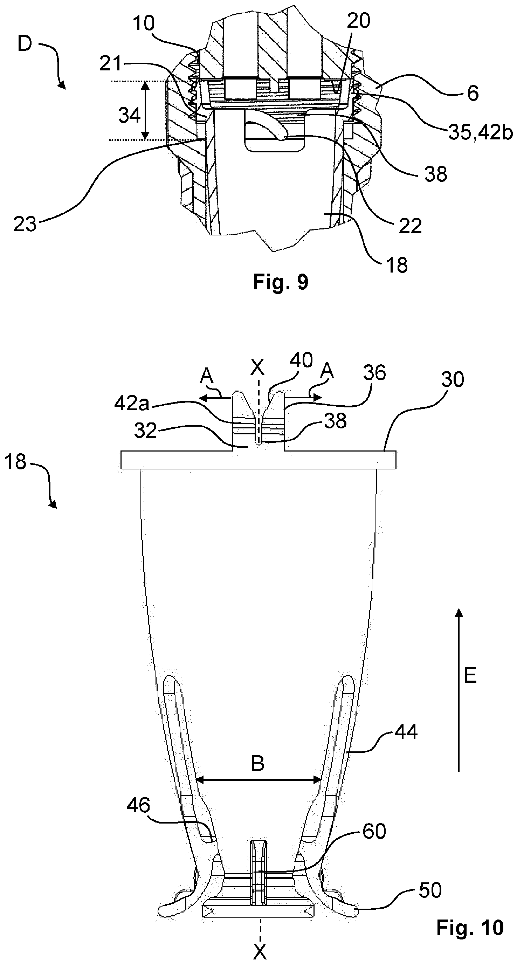

Insbesondere in den Figuren 4, 6 und 10 ist eine weitere Variante der Leuchtenklemme 1, insbesondere der Zugentlastung 18 dargestellt. Vorteilhaft weist die Zugentlastung 18 auf einer zum Außengewindestutzen 4 weisenden Frontfläche 30 zumindest einen, insbesondere zwei oder mehr, umfangsgemäß gleichmäßig verteilt angeordnete und vorzugsweise elastisch verformbare Distanzausgleichselemente 32 auf. Die Distanzausgleichselemente 32 sind vorzugsweise derart ausgebildet, dass sie sich beim Verspannen der Zugentlastung 18 gegen die Stirnfläche 20 des Außengewindestutzens 4 pressen können und sich dabei vorteilhaft elastisch verformen. Mittels der Verformung der Distanzausgleichselemente 32 reduziert sich eine Gesamterstreckung der Zugentlastung 18 axial zur Kanalachse X und ein Abstand der Frontfläche 30 zu der Stirnfläche 20 verringert sich. Die Distanzausgleichselemente 32 in den Figuren 4 und 10 sind in einem unverspannten Zustand dargestellt, wohingegen das in Figur 6 dargestellte Distanzausgleichselement 32 in einem verspannten, verformten und gegen die Stirnfläche 20 des Außengewindestutzens 4 gepressten Zustand dargestellt ist.

Vorteilhaft wird mittels der Distanzausgleichselemente 32 die universale Montierbarkeit der Leuchtenklemme 1 in Bezug auf unterschiedliche Wandstärken verbessert. Dadurch, dass ein Teil des Außengewindes des Außengewindestutzens 4 von der Wandung 24 und ggf. von einer Spannmutter 26 übergriffen werden, ist die Verschlusstülle 6 selbst je nach Wandstärke der Wandung 24 axial zur Kanalachse X betrachtet, unterschiedlich weit auf den Außengewindestutzen 4 aufschraubbar. Exemplarisch ist in den Figuren 3 und 4 eine dicke Wandung 24 mit einer großen Wandstärke Tmax und in den Figuren 5 und 6 eine dünne Wandung 24 mit einer kleinen Wandstärke Tmin dargestellt. Wie dargestellt, ist die Verschlusstülle 6 bei der dünneren Wandung 24, siehe Figur 5, näher an der Spannfläche 22 angeordnet als bei der dickeren Wandung 24, siehe Figur 3. Entsprechend ragt der Außengewindestutzen 4, wie der Vergleich der Figuren 4 und 6 darstellt, bei einer dünnen Wandung 24 tiefer in den Schutzkanal 12 als bei einer dickeren Wandung 24. Dadurch verringert sich ein verfügbarer Montageraum 34 im Bereich des Schutzkanals 12 für die Zugentlastung 18 in axialer Richtung zur Kanalachse X. Der Montageraum 34 erstreckt sich insbesondere zwischen der Stirnfläche 20 des Außengewindestutzens 4 und der Lagerstufe 23, wie exemplarisch in Figur 4 dargestellt ist. Mittels der Distanzausgleichselemente 32 passt sich die Zugentlastung 18 beim Verspannen an den verfügbaren Montageraum 34 an. Entsprechend der in den Figuren 5 und 6 dargestellten Ausführung ist der verfügbare Montageraum 34 bei der Montage in einer dünnen Wandung 24 relativ gering. In diesem Fall verformen sich die Distanzausgleichselemente 32 beim Erreichen einer bestimmten Einspannkraft, wodurch die Montagehilfe sicher und nicht überbelastet angeordnet ist. Gemäß dem in den Figuren 3 und 4 dargestellten Beispiel ist der verfügbare Montageraum 34 bei einer dicken Wandung 24 relativ groß. Die Distanzausgleichselemente 32 sind dabei entweder unverformt oder teilweise, d. h. nicht maximal verformt, in dem Schutzkanal 12 angeordnet, so dass auch hier eine sichere Positionierung gewährleistet ist.

Entsprechend den Figuren 3 bis 6 und 10 sind in einer vorteilhaften Ausführungsform die Distanzausgleichselemente 32 als zwei Distanzausgleichsstege 36 ausgebildet, welche sich jeweils axial zur Kanalachse X in Einführrichtung E von einem mit der Frontfläche 30 verbundenen Anfang jeweils zu einem freien Ende hin erstrecken. Zweckmäßig sind die Distanzausgleichsstege 36 entsprechend den Figuren mittels eines axial zur Kanalachse X ausgebildeten Schlitzes 38 voneinander getrennt ausgebildet. Vorteilhaft ermöglicht es die paarweise Anordnung der Distanzausgleichsstege 36 je Distanzausgleichselement 32, dass sich beim Verspannen die Distanzausgleichsstege 36 invertiert zueinander verformen, so dass in ihrer Gesamtheit die Zugentlastung 18 gleichmäßig zwischen der Stirnfläche 20 und der Verschlusstülle 6 verspannt wird. Insbesondere wird das Risiko, dass sich die Zugentlastung 18 beim Verspannen um die Kanalachse X verdreht, verringert.

Zweckmäßig wird ein Verformungsverhalten der Distanzausgleichsstege 36, d. h. insbesondere, dass sich die Distanzausgleichsstege 36 invertiert zueinander verformen, dadurch verbessert, dass die Distanzausgleichsstege 36 in einer vorteilhaften Ausführung zu ihren freien Enden weisend jeweils keilförmig ausgebildet sind. Die keilförmige Ausbildung ist vorteilhaft in den Figuren 4 und 10 dargestellt.

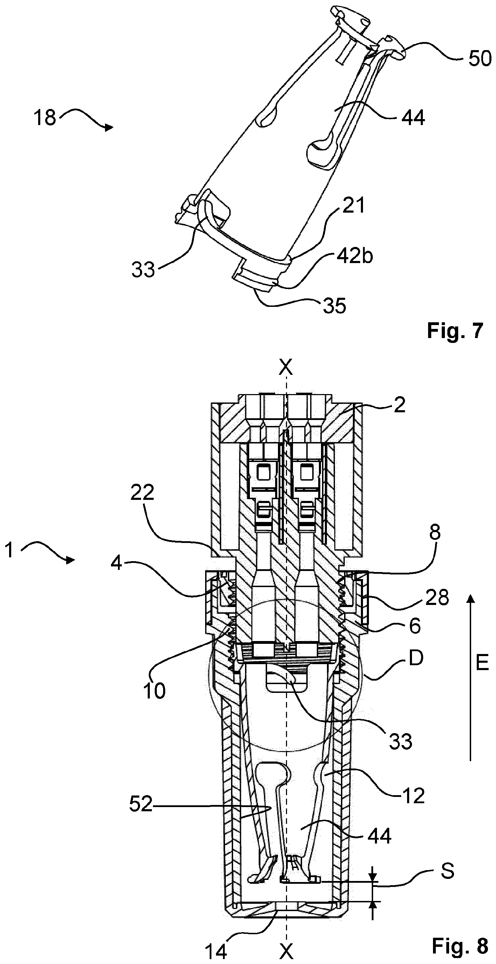

Insbesondere wird die Keilform erzeugt, indem jeweils eine zum Schlitz weisende Keilseite 40 der Distanzausgleichsstege 36 zumindest teilweise derart rampenartig ausgebildet ist, dass sich der Schlitz 38 zu den freien Enden weisend verbreitert. Vorteilhaft ist in Figur 7 eine derartige Ausführung dargestellt, wobei vorteilhaft der Schlitz 38, senkrecht zur Kanalachse X betrachtet, teilweise, vorzugsweise im Bereich ihrer freien Enden, wie ein gleichschenkliges Trapez ausgebildet ist. Wie mit den Pfeilen A in Figur 7 angedeutet, sind die Distanzausgleichsstege 36 jeweils, insbesondere invertiert zueinander, in eine von dem Schlitz 38 abweisende Richtung elastisch verformbar ausgebildet.

Ergänzend oder alternativ zu den Distanzausgleichselementen 32 sieht es eine besondere Ausführung vor, dass die Zugentlastung 18 an dem Kragen, insbesondere an einer gegen die Einführrichtung E weisenden Seite des Kragens 21, zumindest einen, insbesondere zwei oder mehr, umfangsgemäß gleichmäßig verteilte, elastisch verformbare Ausgleichsbeine 33 aufweist. Exemplarisch ist diese Ausführung mit den Ausgleichsbeinen 33 in den Figuren 7 bis 9 als Alternative zu den Distanzausgleichselementen 32 dargestellt, wobei die beiden Varianten ausdrücklich auch miteinander kombinierbar sind. Die Ausgleichsbeine 33 sind gegen die Einführrichtung E weisend vom Kragen 21 derart abstehend ausgebildet, dass sie sich beim Verspannen der Zugentlastung 18 gegen die in Einführrichtung E weisende Lagerstufe 23 der Verschlusstülle 6 pressen können. Vorzugsweise verformen sich die Ausgleichsbeine 33 beim Pressen elastisch, so dass sich der Abstand des Kragens 21 der Zugentlastung 18 zur Lagerstufe 23 der Verschlusstülle 6 verringert.

Mittels der Verformung der Ausgleichsbeine 33 wird die Zugentlastung 18 gegen die Einführrichtung E weisend tiefer in die Verschlusstülle 6 gedrückt. Dadurch ergeben sich wie bei den Distanzausgleichselementen 32 die Vorteile, dass die universale Montierbarkeit der Leuchtenklemme 1 in Bezug auf unterschiedliche Wandstärken verbessert wird. Insbesondere sind die Leuchtenklemmen mit Ausgleichsbeinen 33 derart ausgebildet, dass sie in den oben genannten Einsatzfeldern bzw. Wandstärken funktionsgerecht einsetzbar sind. Zweckmäßig lässt sich ein Wandstärkenbereich, insbesondere die maximal mögliche Differenz von der größtmöglichen Wandstärke und der kleinstmöglichen Wandstärke, durch eine Zugentlastung 18 bereitstellen, welche sowohl Distanzausgleichselemente 32 als auch Ausgleichsbeine 33 aufweist.

Gemäß einer vorteilhaften, in den Figuren 7 bis 9 dargestellten, Ausführung ist der Kragen 21 im Bereich der Ausgleichsbeine 33 unterbrochen. Zweckmäßig sind die Ausgleichsbeine 33 senkrecht zur Einführrichtung E an dem Kragen 21 angeformt und erstrecken sich in einem Winkel oder einer Kurve gegen die Einführrichtung E und in den unterbrochenen Bereich des Kragens 21 weisend. Besonders vorteilhaft können sich die Ausgleichbeine 33 bei der elastischen Verformung in den unterbrochenen Bereich des Kragens 21 verformen, so dass insbesondere bei einer maximalen elastischen Verformung der Ausgleichsbeine 33 die Zugentlastung 18 mit dem Kragen 21 gegen die Einführrichtung weisend vollumfänglich, mit Ausnahme des unterbrochenen Bereichs, auf der Lagerstufe 23 aufliegt.

Insbesondere weist die Zugentlastung 18 auf einer zum Außengewindestutzen 4 weisenden Frontfläche 30 zumindest einen, insbesondere zwei oder mehr, umfangsgemäß gleichmäßig verteilte Gewindelager 35 auf. Die in der Figur 7 dargestellte Zugentlastung 18 weist beispielhaft zwei Gewindelager 35 auf. Die Gewindelager 35 sind vorzugsweise derart ausgebildet, dass die Zugentlastung 18 an dem Innengewinde 10 der Verschlusstülle 6, wie in den Figuren 8 und 9 dargestellt, gelagert ist.

Die Figuren 4 und 7 zeigen zudem eine weitere Variante der Leuchtenklemme 1. Gemäß dieser optionalen Variante weisen die Distanzausgleichselemente 32 und/oder die Gewindelager 35 radial zur Kanalachse X nach außen weisende Gewindekeile 42a, 42b auf. Zur Veranschaulichung sind in Figur 4 die Gewindekeile 42a an den Distanzausgleichselementen 32 ausgebildet und in Figur 7 sind die Gewindekeile 42b an den Gewindelagern 35 ausgebildet. Die Gewindekeile 42a, 42b sind dabei zweckmäßig korrespondierend zu dem Innengewinde 10 der Verschlusstülle 6 ausgebildet, so dass sich die Zugentlastung 18 mittels der Gewindekeile 42a, 42b axial zur Kanalachse X in einem Gewindegang des Innengewindes 10 der Verschlusstülle 6 abstützen kann. Diese Variante verbessert die Lagerung sowie die Montage der Zugentlastung 18. Insbesondere ist die Zugentlastung 18 dadurch in einem nicht montierten Zustand der Leuchtenklemme 1 verlustsicher in der Verschlusstülle 6 gelagert.

Zweckmäßig werden die Gewindekeile 42a, 42b in dem Gewindegang angeordnet, in den die Zugentlastung 18 axial zur Kanalachse X gegen die Einführrichtung E in den Schutzkanal 12 eingesteckt wird. Vorteilhaft verformen sich, insbesondere bei den in den Figuren 3 bis 6 dargestellten Ausführungen, die Distanzausgleichselemente 32 vorzugsweise radial elastisch in Richtung der Kanalachse X, wenn die Gewindekeile 42 gegen eine Gewindeflanke des Innengewindes stoßen, und sich rückformen, wenn die Gewindekeile 42 im Bereich des Gewindegangs sind.

Gemäß einer Entwicklung der Gewindekeile 42a, 42b der Distanzausgleichselemente 32 und/oder der Gewindelager 35 sind die Gewindekeile 42a, 42b derart ausgebildet, dass die Zugentlastung 18 in das Innengewinde 10 der Verschlusstülle 6 ein- und ausschraubbar ist. Diese optionale Montage- und/oder Demontagemöglichkeit kann alternativ oder ergänzend zu den radial zur Kanalachse X verformbaren Distanzausgleichselementen 32 vorgesehen sein. Insbesondere die Entnahme der Zugentlastung 18 aus der Verschlusstülle 6 ist bei einer ausschraubbaren Ausführung leichter.

Eine andere Ausführungsform sieht vor, dass die Zugentlastung 18 insbesondere zumindest zwei, vorzugsweise zumindest drei, sich axial zur Kanalachse X erstreckende und zur Kanalachse X radialelastisch ausgebildete Federarme 44 aufweist. Insbesondere in den Figuren 10 bis 12 sind vorteilhafte Ausführungen der Federarme 44 dargestellt. Die Federarme 44 erstrecken sich zweckmäßig jeweils gegen die Einführrichtung E weisend zu einem freien Abschluss und sind vorteilhaft radial nach außen gegen eine Rückstellkraft elastisch verformbar.

Vorteilhaft können die Federarme 44 mittels der zu montierenden Zuleitung 16 elastisch verformt werden, wie z. B. in Figur 11 dargestellt. Insbesondere ragen dafür die Federarme 44 radial zur Kanalachse X in einen Bereich, welchen die Zuleitung 16 beim Durchführen in Einführrichtung E passiert. Auf Grund der elastischen Verformung wirken die Federarme 44 zweckmäßig mit einer Rückstellkraft gegen einen Leitungsmantel der Zuleitung 16, woraus eine Reibkraft resultiert, welche die Anschlussstelle von der Zuleitung 16 an den Anschlusskörper 2 bei einem Zug der Zuleitung 16 gegen die Einführrichtung E entlastet.

Um die elastische Verformbarkeit zu steigern bzw. die Rückstellkraft abzuschwächen, verringert sich gemäß einer, in den Figuren 10 und 11 dargestellten, Variante jeweils eine in Umfangsrichtung des Schutzkanals 12 betrachtete Breite B der Federarme 44 zu dem freien Abschluss hin. Zweckmäßig verjüngen sich die Federarme 44 gegen die Einführrichtung E in ihrer Breite B, wie in Figur 11 dargestellt, zumindest über einen Teilabschnitt des jeweiligen Federarms 44.

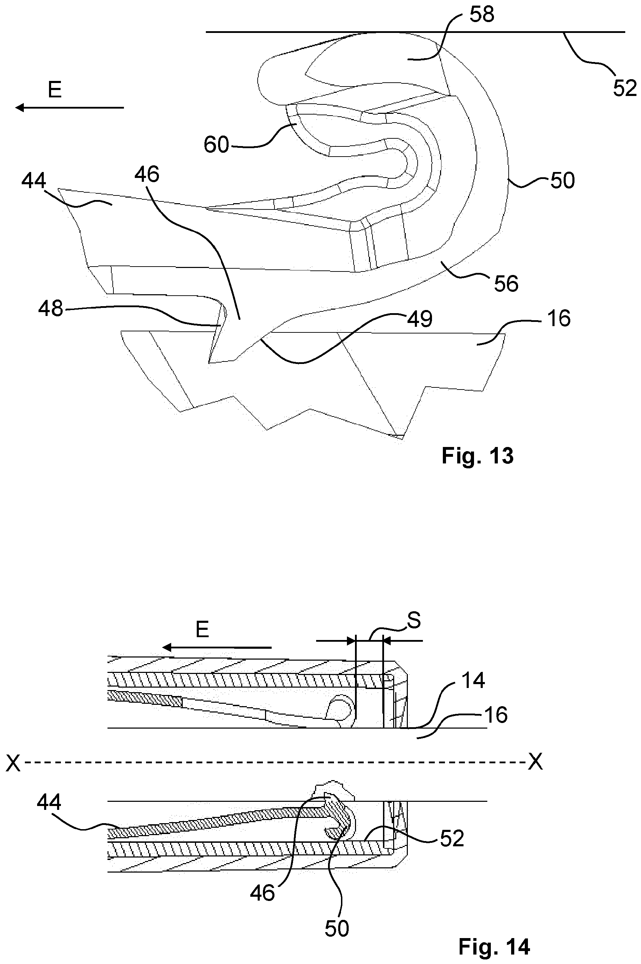

Um die Entlastung der Anschlussstelle zu verbessern, weisen die Federarme 44 in einer besonderen Variante jeweils auf einer zur Kanalachse X weisenden Innenfläche eine von der Innenfläche radial abstehende Kralle 46 auf. Diese wiederum weist, wie in den Figuren 12 und 13 dargestellt, eine gegen die Einführrichtung E weisende Schneidkante 48 auf. Wie der Vergleich der Darstellungen in den Figuren 12 und 13 zeigt, ist die Kralle 46 derart ausgebildet, dass sie beim Einführen der Zuleitung 16 in die Einführrichtung E über einen Leitungsmantel der Zuleitung 16 gleitet, siehe Figur 12, und sich bei einem Auszug der Zuleitung 16 gegen die Einführrichtung E mit der Schneidkante 48 in den Leitungsmantel der Zuleitung 16 eingräbt, siehe Figuren 13 und 14.

Vorteilhaft kann zum Verbessern der Einschneideigenschaften der Kralle 46 die Kralle 46 hakenförmig ausgebildet sein, wobei die Schneidkante 48, wie in Figur 12 dargestellt, einen Schneidwinkel α kleiner oder gleich 90° einschließt und die Kralle 46 vorzugsweise eine in Einführrichtung E zur Kanalachse X ansteigend verlaufende und an der Schneidkante 48 mündende Gleitkante 49 aufweist. Zweckmäßig kann die Gleitkante 49 auch, wie in den Figuren 12 und 13 dargestellt, zwei oder mehr unterschiedliche Steigungen aufweisen.

Vorteilhaft weisen die Federarme 44, wie in den Figuren 10 bis 14 dargestellt, an ihren freien Abschlüssen jeweils eine sich radial zur Kanalachse X nach außen erstreckende Anlagelasche 50 auf. Zweckhaft ist die Anlagelasche 50 dabei axial zur Kanalachse X zumindest in Einführrichtung E gegen eine Rückstellkraft elastisch verformbar ausgebildet. Hierbei sind die radial nach außen zur Kanalachse X weisenden Anlagelaschen 50 zumindest teilweise auf einer nicht dargestellten Kreisbahn angeordnet. Bevorzugt ist zumindest ein größter Kreisdurchmesser der Kreisbahn bei einer zur Kanalachse X radial nach außen weisenden elastischen Verformung der Federarme 44, insbesondere in einem in den Figuren 11 bis 14 dargestellten Zustand, größer als ein kleinster Innendurchmesser des Schutzkanals 12 in einem Schutzabschnitt zwischen dem Innengewinde 10 und der Einführungsöffnung 14.

In dieser Ausführung wirken die Anlagelaschen 50 synergetisch mit der elastischen Verformung der Federarme 44 zusammen, so dass beim Einführen der Zuleitung 16 die Federarme 44 radial zur Kanalachse X nach außen verformt werden, wodurch die Anlagelaschen 50 gegen eine Innenwandung 52 des Schutzkanals 12 gedrückt werden und sich in die Einführrichtung E gegen die eigene Rückstellkraft elastisch verformen. Insbesondere kann die Zugentlastung 18 auch derart ausgebildet sein, dass sie stets, auch ohne eine radial zur Kanalachse X nach außen weisende Verformung der Federarme 44, einen Anlagenkontakt zur Innenwandung 52 des Schutzkanals 12 aufweist, wobei die Anlagelaschen 50 dabei zweckmäßig einen unverformten Zustand aufweisen.

Zweckmäßig ist das Maß der elastischen Verformung der Federarme 44 abhängig von dem Leitungsquerschnitt der Zuleitung 16.

Die elastische Verformung der Anlagelaschen 50 verstärkt die auf den Leitungsmantel der Zuleitung 16 wirkende Kraft. Insbesondere kann mittels der Wirkung der Anlagelaschen 50 die Zugentlastung 18 auf einen größeren Bereich unterschiedlicher Leitungsquerschnitte der Zuleitung 16 angepasst werden, wodurch die Zugentlastung 18 universeller einsetzbar ist. Insbesondere ist die Verformung der Anlagelasche 50 in die Einführrichtung E bei einem geringen Leitungsquerschnitt der Zuleitung 16 geringer, als bei einer Zuleitung 16 mit einem im Vergleich größeren Leitungsquerschnitt. Die Rückstellkraft, welche auf die Zuleitung 16 wirkt und aus der Rückstellkraft des Federarms 44 und der Rückstellkraft der Anlagelasche 50 resultiert, gewährleistet dadurch innerhalb eines zulässigen Bereichs bei kleinen und bei größeren Leitungsquerschnitten der Zuleitung 16 eine ausreichende Zugentlastung.

Die Anlagelaschen 50 sind vorzugsweise derart gestaltet, dass sie bei der Pressung gegen die Innenwandung 52 des Schutzkanals 12 in Einführrichtung E biegen. Dazu weist beispielsweise die Anlagelasche 50 einen in Einführrichtung E abgewinkelten Endabschnitt 54 auf. Vorzugsweise ist der Endabschnitt 54 lediglich bzw. spätestens ab dem Zeitpunkt des ersten Anlagekontaktes zwischen der Anlagelasche 50 und der Innenwandung 52 des Schutzkanals 12, insbesondere wenn der Anlagekontakt durch eine radiale Verformung der Federarme 44 herbeigeführt wird, in Einführrichtung E abgewinkelt. Insbesondere ist der Endabschnitt 54 der Anlagelasche 50 zumindest bei der Verformung der Federarme 44, wie in den Figuren 8 und 9 dargestellt, in Einführrichtung E abgewinkelt. Insbesondere schließt die Anlagelasche 50 mit dem Endabschnitt 54 spätestens ab bzw. unmittelbar vor dem Zeitpunkt des ersten Anlagekontaktes in Einführrichtung E mit der Innenwandung 52 des Schutzkanals 12 einen Winkel β von größer 90° ein.

Gemäß dem Ausführungsbeispiel in den Figuren 11 und 12 weisen die Anlagelaschen 50 vorteilhaft jeweils einen mit dem freien Abschluss der Federarme 44 verbundenen Übergangsabschnitt 56 auf. Innerhalb dieses Übergangsabschnitts 56 biegen die Anlagelaschen 50, wie in Figur 12 dargestellt, jeweils radial zur Kanalachse X nach außen ab, wobei die Anlagelaschen 50 von dem Übergangsabschnitt 56 in einen auf der Kreisbahn angeordneten Kontaktabschnitt 58 der Anlagelaschen 50 übergehen. Zweckmäßig ist eine in Umfangsrichtung des Schutzkanals 12 betrachtete Breite der Anlagelasche 50 im Kontaktabschnitt 58 größer als im Übergangsabschnitt 56. Dadurch wird die Anlage der Anlagelasche 50 an der Innenwandung 52 des Schutzkanals 12 stabilisiert, so dass sich die Anlagelaschen 50 sicherer und gleichmäßiger verformen.

Insbesondere weisen die Federarme 44, wie vorteilhaft in Figur 12 dargestellt, auf einer zum Schutzkanal 12 weisenden Außenfläche eine Kraftausgleichsrippe 60 auf. Diese dient vorteilhaft zur Verstärkung der Rückstellkraft der Anlagelaschen 50 zumindest gegen eine Verformung in die Einführrichtung E weisend. Die Kraftausgleichsrippe 60 erstreckt sich zweckmäßig jeweils von einem Bereich im freien Abschluss des Federarms 44 bis zumindest einem sich radial zur Kanalachse X erstreckenden Teil der Anlagelasche 50. Insbesondere in Figur 12 ist eine Ausführung dargestellt, gemäß welcher sich die Kraftausgleichsrippe 60 bis in den Kontaktabschnitt 58 der Anlagelasche 50 erstreckt. Um die Rückstellkraft der Anlagelasche 50 vorteilhaft zu verstärken, ist die Kraftausgleichsrippe 60 korrespondierend mit der Anlagelasche 50 elastisch verformbar ausgebildet.

Entsprechend der Ausführung in Figur 12 ist die Kraftausgleichsrippe 60 vorzugsweise an lediglich zwei Enden der Kraftausgleichsrippe 60 mit dem Federarm 44 verbunden. Dadurch wird die Verformbarkeit der Anlagelasche 50 bzw. der Kraftausgleichsrippe 60 erhöht und die Rückstellkraft verringert. Entsprechend Figur 12 ist die Kraftausgleichsrippe 60 vorzugsweise als ein sich zwischen den mit dem Federarm 44 verbundenen Enden erstreckender Steg ausgebildet, welcher der Kontur des Federarms 44 folgend beabstandet zum Federarm 44 ausgebildet ist.

In einem nicht dargestellten Beispiel kann die Rückstellkraft der Anlagelasche 50 erhöht werden, indem die Kraftausgleichsrippe 60 an drei oder mehr, zweckmäßig über seine ganze Erstreckung an die Anlagelasche 50 angebunden ist. Vorteilhaft kann durch eine ausgewählte Positionierung der Anbindungsstellen der Kraftausgleichsrippe 60 an die Anlagelasche 50 das Verformungsverhalten eingestellt werden.

Besonders bevorzugt ist die Zugentlastung 18 in einer Variante der Leuchtenklemme 1 monolithisch einstückig ausgebildet. Die monolithische Ausführung verbessert die Bauteileigenschaften und verringert die Ausbildung von herstellungsbedingten Schwachstellen. Weiterhin vorteilhaft ist die Zugentlastung 18 in einem kostengünstigen Herstellungsverfahren, insbesondere in einem Herstellungsschritt ohne ein Nachbearbeitungsverfahren, hergestellt. Insbesondere ist die Zugentlastung 18 monolithisch einstückig zusammen mit den Federarmen 44 und/oder den Distanzausgleichselementen 32 und/oder den Ausgleichsbeinen 33 und/oder den Gewindelagern 35 ausgebildet.

Weiterhin betrifft die Erfindung eine Zugentlastung 18 zur Montage in einer Leuchtenklemme 1. Vorzugsweise betrifft die Leuchtenklemme 1 eine der vorgenannten Ausführungen. Erfindungsgemäß weist die Zugentlastung 18 die Merkmale zumindest einer der vorgenannten Ausführungen auf.

Insbesondere ist eine erfindungsgemäße Zugentlastung 18 in Leuchtenklemmen 1 nachrüstbar. Insbesondere ist die Zugentlastung 18 in eine aus der DE 20 2016 106 319 U1 bekannte Leuchtenklemme 1 in der erfindungsgemäßen Art nachrüstbar, wobei auf Grund der erfindungsgemäßen Zugentlastung 18 die Verschlusstülle 6 und/oder der Anschlusskörper 2 nicht für die Aufnahme der Zugentlastung 18 präpariert werden müssen/muss.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Leuchtenklemme
- 2: Anschlusskörper
- 4: Außengewindestutzen
- 6: Verschlusstülle
- 8: Außengewinde
- 10: Innengewinde der Verschlusstülle
- 12: Schutzkanal
- 14: Einführungsöffnung
- 16: Zuleitung
- 18: Zugentlastung
- 20: Stirnfläche
- 21: Kragen
- 22: Spannfläche
- 23: Lagerstufe
- 24: Wandung
- 26: Spannmutter
- 28: Dichthülse
- 30: Frontfläche
- 32: Distanzausgleichselement
- 33: Ausgleichsbein
- 34: Montageraum
- 35: Gewindelager
- 36: Distanzausgleichssteg
- 38: Schlitz zwischen den Distanzausgleichsstegen
- 40: Keilseite
- 42a,42b: Gewindekeile
- 44: Federarm
- 46: Kralle
- 48: Schneidkante

- 49: Gleitkante
- 50: Anlagelasche
- 52: Innenwandung des Schutzkanals
- 54: Endabschnitt
- 56: Übergangsabschnitt
- 58: Kontaktabschnitt
- 60: Kraftausgleichsrippe

- A: Verformungsrichtung der Distanzausgleichsstege
- X: Kanalachse
- S: Axiales Spiel
- B: Breite der Federarme
- E: Einführrichtung
- Tmax: Große Wandstärke
- Tmin: Kleine Wandstärke
- α: Schneidwinkel
- β: Winkel zwischen Endabschnitt und Innenwandung des Schutzkanals

## Patentansprüche

1. Leuchtenklemme (1) aufweisend einen Anschlusskörper (2) mit einem Außengewindestutzen (4) und einer auf ein Außengewinde (8) des Außengewindestutzens (4) mit einem Innengewinde (10) aufschraubbaren Verschlusstülle (6), wobei die Verschlusstülle (6) einen Schutzkanal (12) und an der dem Anschlusskörper (2) gegenüberliegenden Stirnseite eine Einführungsöffnung (14) zum Durchstecken einer elektrischen Zuleitung (16) in eine Einführrichtung (E) entlang einer Kanalachse (X) des Schutzkanals (12) zum Anschließen an den Anschlusskörper (2) aufweist und eine koaxial in dem Schutzkanal (12) der Verschlusstülle (6) angeordnete hülsenartige Zugentlastung (18), die zwischen einer Stirnfläche (20) des Außengewindestutzens (4) und der Einführungsöffnung (14) der Verschlusstülle (6) axial zur Kanalachse (X) verspannbar ausgebildet ist, **dadurch gekennzeichnet, dass** der Anschlusskörper (2) eine Spannfläche (22) aufweist, aus welcher sich der Außengewindestutzen (4) gegen die Einführrichtung (E) heraus erstreckt, wobei der Außengewindestutzen (4) durch eine Montageöffnung einer Wandung (24), insbesondere einer Gehäusewandung, durchführbar ist, so dass die Wandung (24) mit einem Randbereich der Montageöffnung zwischen der Verschlusstülle (6) und der Spannfläche (22) einspannbar ist.

2. Leuchtenklemme (1) nach Anspruch 1,
**dadurch gekennzeichnet, dass** die Zugentlastung (18) auf einer zum Außengewindestutzen (4) weisenden Frontfläche (30) zumindest einen, insbesondere zwei oder mehr, umfangsgemäß gleichmäßig verteilte elastisch verformbare Distanzausgleichselemente (32) aufweist, welche derart ausgebildet sind, dass sie sich beim Verspannen der Zugentlastung (18) gegen die Stirnfläche (20) des Außengewindestutzens (4) pressen können und sich dabei elastisch verformen, so dass sich der Abstand der Frontfläche (30) zu der Stirnfläche (20) verringert.

3. Leuchtenklemme (1) nach Anspruch 2,
**dadurch gekennzeichnet, dass** die Distanzausgleichselemente (32) als zwei Distanzausgleichsstege (36) ausgebildet sind, welche sich jeweils axial zur Kanalachse (X) und in Einführrichtung (E) von einem mit der Frontfläche (30) verbundenen Anfang jeweils zu einem freien Ende hin erstrecken, wobei die Distanzausgleichsstege (36) mittels eines axial zur Kanalachse (X) ausgebildeten Schlitzes voneinander getrennt ausgebildet sind.

4. Leuchtenklemme (1) nach Anspruch 3,
**dadurch gekennzeichnet, dass** die Distanzausgleichsstege (36) zu ihren freien Enden weisend jeweils keilförmig ausgebildet sind, indem jeweils eine zum Schlitz (38) weisende Keilseite (40) der Distanzausgleichsstege (36) zumindest teilweise derart rampenartig ausgebildet ist, dass sich der Schlitz (38) zu den freien Enden weisend verbreitert, insbesondere der Schlitz (38) senkrecht zur Kanalachse (X) betrachtet teilweise wie ein gleichschenkliges Trapez ausgebildet ist, wobei die Distanzausgleichsstege (36) jeweils in eine von dem Schlitz (38) abweisende Richtung elastisch verformbar ausgebildet sind.

5. Leuchtenklemme (1) nach einem der Ansprüche 1 bis 4,
**dadurch gekennzeichnet, dass** die Zugentlastung (18) einen radial zur Kanalachse (X) nach außen ragenden Kragen (21) aufweist, wobei der Kragen (21), insbesondere an einer gegen die Einführrichtung (E) weisenden Seite des Kragens (21), zumindest einen, insbesondere zwei oder mehr, umfangsgemäß gleichmäßig verteilte, elastisch verformbare Ausgleichsbeine (33) aufweist, welche gegen die Einführrichtung (E) weisend vom Kragen (21) derart abstehend ausgebildet sind, dass sie sich beim Verspannen der Zugentlastung (18) gegen eine in Einführrichtung (E) weisende Lagerstufe (23) der Verschlusstülle (6) pressen können und sich dabei elastisch verformen, so dass sich der Abstand des Kragens (21) der Zugentlastung (18) zur Lagerstufe (23) der Verschlusstülle (6) verringert.

6. Leuchtenklemme (1) nach Anspruch 5,
**dadurch gekennzeichnet, dass** der Kragen (21) im Bereich der Ausgleichsbeine (33) unterbrochen ist, wobei die Ausgleichsbeine (33) senkrecht zur Einführrichtung (E) an dem Kragen (21) angeformt sind und sich in einem Winkel oder einer Kurve gegen die Einführrichtung (E) und in den unterbrochenen Bereich des Kragens (21) weisend erstrecken, so dass sich die Ausgleichsbeine (33) bei der elastischen Verformung in den unterbrochenen Bereich des Kragens (21) verformen können.

7. Leuchtenklemme (1) nach Anspruch 5 oder 6,
**dadurch gekennzeichnet, dass** die Zugentlastung (18) auf einer zum Außengewindestutzen (4) weisenden Frontfläche (30) zumindest einen, insbesondere zwei oder mehr, umfangsgemäß gleichmäßig verteilte Gewindelager (35) aufweist, welche derart ausgebildet sind, dass die Zugentlastung (18) an dem Innengewinde (10) der Verschlusstülle (6) gelagert ist.

8. Leuchtenklemme (1) nach einem der Ansprüche 2 bis 7,
**dadurch gekennzeichnet, dass** die Distanzausgleichselemente (32) und/oder die Gewindelager (35) radial zur Kanalachse (X) nach außen weisende Gewindekeile (42a, 42b) aufweisen, welche korrespondierend zu dem Innengewinde (10) der Verschlusstülle (6) ausgebildet sind, so dass sich die Zugentlastung (18) mittels der Gewindekeile (42a, 42b) axial zur Kanalachse (X) in einem Gewindegang des Innengewindes der Verschlusstülle (6) abstützen kann.

9. Leuchtenklemme (1) nach Anspruch 8,
**dadurch gekennzeichnet, dass** die Gewindekeile (42a, 42b) derart ausgebildet sind, dass die Zugentlastung (18) in das Innengewinde (10) ein- und ausschraubbar ist.

10. Leuchtenklemme (1) nach einem der Ansprüche 1 bis 9,
**dadurch gekennzeichnet, dass** die Zugentlastung (18) zumindest zwei sich axial zur Kanalachse (X) erstreckende und zur Kanalachse (X) radialelastisch angeordnete Federarme (44) aufweist, wobei sich die Federarme (44) jeweils gegen die Einführrichtung (E) weisend zu einem freien Abschluss erstrecken und radial nach außen gegen eine Rückstellkraft elastisch verformbar sind.

11. Leuchtenklemme (1) nach Anspruch 10,
**dadurch gekennzeichnet, dass** sich jeweils eine in Umfangsrichtung des Schutzkanals (12) betrachtete Breite (B) der Federarme (44), zu dem freien Abschluss hin, zumindest über einen Teilabschnitt des jeweiligen Federarms (44) verringert.

12. Leuchtenklemme (1) nach Anspruch 10 oder 11,
**dadurch gekennzeichnet, dass** die Federarme (44) jeweils auf einer zur Kanalachse (X) weisenden Innenfläche eine von der Innenfläche radial abstehende Kralle (46) aufweisen, welche eine gegen die Einführrichtung (E) weisende Schneidkante (48) aufweist.

13. Leuchtenklemme (1) nach einem der Ansprüche 10 bis 12,
**dadurch gekennzeichnet, dass** die Federarme (44) an ihren freien Abschlüssen jeweils eine radial zur Kanalachse (X) sich nach außen erstreckende Anlagelasche (50) aufweisen, und die Anlagelaschen (50) axial zur Kanalachse (X) zumindest in Einführrichtung (E) gegen eine Rückstellkraft elastisch verformbar ausgebildet sind, wobei die radial nach außen zur Kanalachse (X) weisenden Anlagelaschen (50) zumindest teilweise auf einer Kreisbahn angeordnet sind, dessen zumindest größter Kreisdurchmesser zumindest bei einer zur Kanalachse (X) radial nach außen weisenden elastischen Verformung der Federarme (44) größer ist als ein kleinster Innendurchmesser des Schutzkanals (12) in einem Schutzabschnitt zwischen dem Innengewinde (10) und der Einführungsöffnung (14).

14. Leuchtenklemme (1) nach Anspruch 13,
**dadurch gekennzeichnet, dass** die Anlagelaschen (50) jeweils einen mit dem freien Abschluss der Federarme (44) verbundenen Übergangsabschnitt (56) aufweisen, in welchem die Anlagelaschen (50) sich jeweils radial zur Kanalachse (X) nach außen biegen und in einen auf der Kreisbahn angeordneten Kontaktabschnitt (58) der Anlagelaschen (50) übergehen, wobei eine in Umfangsrichtung des Schutzkanals (12) betrachtete Breite der Anlagelasche (50) im Kontaktabschnitt (58) größer ist als im Übergangsabschnitt (56).

15. Leuchtenklemme (1) nach einem der Ansprüche 11 bis 14,
**dadurch gekennzeichnet, dass** die Federarme (44) auf einer zum Schutzkanal (12) weisenden Außenfläche eine Kraftausgleichsrippe (60) aufweisen, welche sich jeweils von einem Bereich im freien Abschluss des Federarms (44) bis zumindest einem sich radial zur Kanalachse (X) erstreckenden Teil der Anlagelasche (50) erstreckt, wobei die Kraftausgleichsrippe (60) korrespondierend mit der Anlagelasche (50) elastisch verformbar ausgebildet ist und die Rückstellkraft der Anlagelasche (50) verstärkt.

16. Leuchtenklemme (1) nach Anspruch 15,
**dadurch gekennzeichnet, dass** die Kraftausgleichsrippe (60) an lediglich zwei Enden der Kraftausgleichsrippe (60) mit dem Federarm (44) verbunden ist, wobei die Kraftausgleichsrippe (60) als ein sich zwischen den mit dem Federarm (44) verbundenen Enden erstreckender Steg ausgebildet ist, welcher der Kontur des Federarms (44) folgend beabstandet zum Federarm (44) ausgebildet ist.

17. Leuchtenklemme (1) nach einem der Ansprüche 1 bis 16,
**dadurch gekennzeichnet, dass** das die Zugentlastung (18) monolithisch einstückig, insbesondere zusammen mit den Federarmen (44) und/oder den Distanzausgleichselementen (32) und/oder den Ausgleichsbeinen (33) und/oder den Gewindelagern (35), ausgebildet ist.

18. Zugentlastung (18) zur Montage in einer Leuchtenklemme (1), insbesondere nach einem der Ansprüche 1 bis 17,
**gekennzeichnet durch** die Zugentlastung gemäß den Merkmalen eines der Ansprüche 1 bis 17.
